Europäisches Patentamt

European Patent Office

Office européen des brevets

(19)

(11)  EP 1 026 837 A2

(12)  **EUROPÄISCHE PATENTANMELDUNG**

(43) Veröffentlichungstag:
     09.08.2000  Patentblatt 2000/32

(51) Int. Cl.7: **H04B 10/08**

(21) Anmeldenummer: 00440028.9

(22) Anmeldetag: 31.01.2000

(84) Benannte Vertragsstaaten:
     **AT BE CH CY DE DK ES FI FR GB GR IE IT LI LU
     MC NL PT SE**
     Benannte Erstreckungsstaaten:
     **AL LT LV MK RO SI**

(30) Priorität: **03.02.1999 DE 19904252**

(71) Anmelder: **ALCATEL
     75008 Paris (FR)**

(72) Erfinder: **Schaepperle, Joerg
     70180 Stuttgart (DE)**

(74) Vertreter:
     **Rausch, Gabriele, Dr. et al
     Alcatel
     Intellectual Property Department, Stuttgart
     Postfach 30 09 29
     70449 Stuttgart (DE)**

(54)  **Methode zur Detektion von Verzerrungen sowie Empfänger für verzerrte optische Signale**

(57)    Es wird eine Methode zur Detektion von Verzerrungen von optischen Signalen sowie ein Empfänger für verzerrte optische Signale vorgeschlagen, wobei der Empfänger aus einem optoelektrischen Wandler, einem Equalizer und einem Mikroprozessor besteht und der Equalizer mit mindestens einem Verzerrungsdetektor verbunden ist und sowohl Verzerrungsdetektor und Equalizer mit einer gemeinsamen Steuerung über einen Mikroprozessor in Verbindung stehen.

Fig.1

## Beschreibung

Die Erfindung geht aus von einer Methode zur Detektion von Verzerrungen von optischen Signalen sowie einem Empfänger für durch Dispersionseffekte verzerrte optische Signale nach der Gattung der unabhängigen Ansprüche.

Aus der Veröffentlichung "Equalisation of bit distortion induced by polarisation mode dispersion" H. Bülow, Proceedings 2 NOC 97, Seite 65 bis 72, sind Methoden zur Behandlung von optischen Signalen, die aufgrund von Polarisationsmodendispersion gestört sind, bekannt. In dieser Veröffentlichung werden mehrere Methoden aufgezeigt, durch geeignete Filterung die gestörten Signale zu bearbeiten, um das ungestörte, die Information tragende Signal wiederzugewinnen. Die Polarisationsmodendispersion tritt als Effekt der Doppelbrechung der Übertragungs-Glasfaser auf. Das Signal teilt sich in einen Signalanteil entsprechend der schnellen und der langsamen Achse des Doppelbrechungstensors. Die beiden Signalanteile unterliegen dabei bei der Übertragung unterschiedlichen Gruppengeschwindigkeiten. Dies führt zu einem Laufzeitunterschied $\Delta t$. Die Leistung in den Signalanteilen spaltet sich auf die beiden Hauptachsen auf und diese Leistungsverteilung wird mit dem Parameter $\gamma$ definiert. Die Polarisationsmodendispersion hängt von der Temperatur sowie den Übertragungsbedingungen auf der Glasfaserstrecke ab und ändert sich mit der Zeit. Für einen effektiven Ausgleich der Polarisationsmodendispersion wäre eine Messung der beiden Parameter $\Delta \tau$ und $\gamma$ von Bedeutung. Eine solche Messung der Parameter ist bisher nicht bekannt. Auch die zitierte Veröffentlichung behandelt die gestörten Signale durch Filterung gleich weiter und bestimmt nicht zunächst die Parameter der Polarisationsmodendispersion. Zur einer schnellen adaptiven elektronischen Entzerrung von Polarisationsmodendispersion verzerrten optischen Signalen ist es aber von großern Vorteil, die Verzerrung messtechnisch zuvor zu ermitteln. Aufgabe der Erfindung ist es, die beiden Parameter der Polarisationmodendispersion auch bei starken Verzerrungen des Signals, beispielsweise bei vollständig geschlossenen Auge, in einem Augendiagramm, sehr schnell zu detektieren.

Die erfindungsgemäße Methode mit den kennzeichnenden Merkmalen des unabhängigen Anspruchs hat den Vorteil, daß die Parameter der Polarisationsmodendispersion direkt gemessen und das Ergebnis auswertbar für einen Equalizer zur Verfügung steht. Zur Messung der Parameter der Polarisationsmodendisperison wird das Eingangssignal zunächst von seinen enthaltenen Informationen befreit, die durch Modulation der Sendeimpulse entstanden sind und die so bereinigten gestörten Signale zur Auswertung analysiert.

Weitere vorteilhafte Ausbildungen und Verbesserungen des Verfahrens sind in den Unteransprüchen aufgeführt.

Ausführungsbeispiele der Erfindung sind in den Zeichnungen dargestellt und in der nachfolgenden Beschreibung näher erläutert. Es zeigt

Fig. 1 eine Schaltung zur Detektion von Dispersions-Verzerrungen

Fig. 2 Autokorrelations-Funktion der PMD-Verzerrung über der Achse $\tau$

Fig. 3 optischer Empfänger mit gesteuertem Equalizer

Fig. 4 optischer Empfänger mit geregeltem Equalizer

Fig. 5 optischer Empfänger für Kreuzkorrelation zwischen verzerrtem und entzerrtem Signal

Fig. 6 die Kreuzkorrelationsfunktion nach Fig. 5

Fig. 7 optischer Empfänger mit zwei Detektoren.

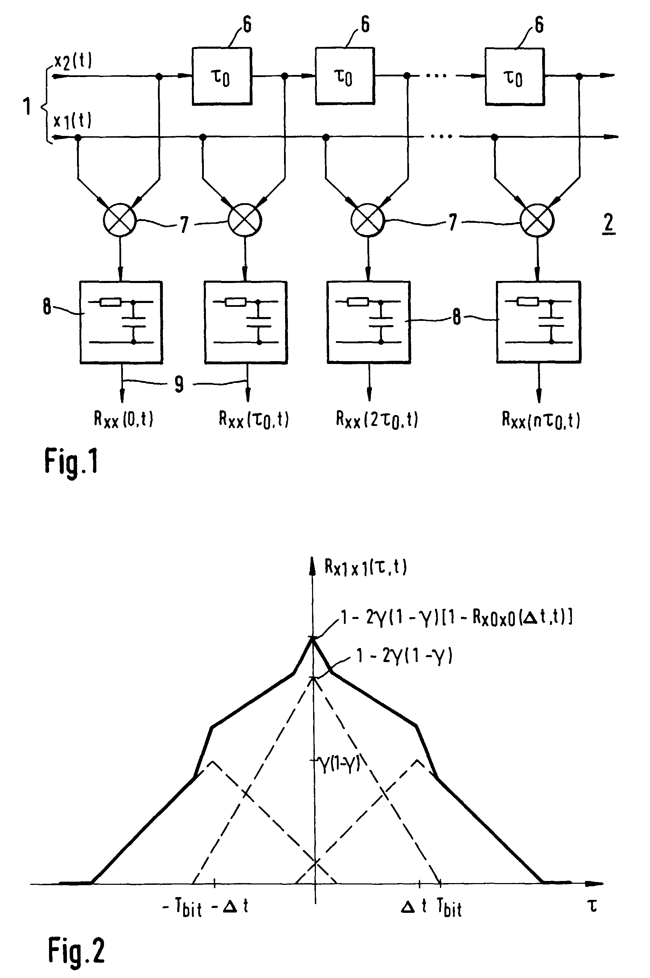

Fig. 1 zeigt die Schaltung in einem Verzerrungsdetektor 2. Das Eingangssignal 1 ist auf zwei Signalstränge aufgeteilt. Im Signalzweig $x_2(t)$ sind Verzögerer 6 integriert. Das Signal $x_2(t-\tau)$ und das andere Eingangssignal $x_1(t)$ werden einem Multiplizierer 7 zugeführt. Der Multiplizierer verknüpft das Signal $x_1(t)$ jeweils mit einem Signal $x_2(t-\tau)$ aus dem Signalzweig mit den Verzögerern 6. Das Ausgangssignal der Verzögererkette und das durchgeschleifte Signal $x_1(t)$ können als Ausgangssignale zur weiteren Verarbeitung zur Verfügung gestellt werden. Die Multiplizierer 7 sind jeweils mit einem Tiefpass 8 ,oder allgemeiner einem Integrator, verbunden. Die Ausgangssignale 9 der Tiefpässe stehen für die weitere Verarbeitung bereit. Beispielsweise können die Signale nach einer A/D Wandlung mit einem Signalprozessor weiterverarbeitet werden. Das Signal $x_2(t)$, das in die Verzögerungskette eingespeist wird, kann aus dem Eingangssignal erzeugt werden, oder auch nach einer Filterung im optischen Empfänger erzeugt werden. Das durch Polarisationsmodendispersion verzerrte Signal $x_1(t)$ ergibt sich aus dem gesendeten in erster Näherung unverzerrtem. Signal $x_0(t)$ durch

$$x_1(t)= (1-\gamma) x_0(t) + \gamma x_0(t-\Delta t)$$

darin gibt der Faktor $\gamma$ die Leistungsaufteilung zwischen den Polarisationsmoden und $\Delta t$ den Laufzeitunterschied an. Die Ausgangssignale der Tiefpässe stellen Abtastwerte der Kurzzeit-Autokorrelationsfunktion bezüglich der Variablen $\tau$ an den Stellen $\tau = k \cdot \tau_0$ dar. Sie sind abhängig von der Zeit t und stehen bei geeigneter Wahl der Impulsantwort der Tiefpässe h(t) in unmittelbarem Zusammenhang mit den ebenfalls zeitabhängigen Parametern $\Delta t$ und $\gamma$.

Fig. 2 zeigt die Autokorrelationsfunktion für den Fall eines gleichanteilfreien binären Signals $x_0$, eines Rechteckimpulses, mit Amplitude $\pm 1$ und Bitperiode $T_{bit}$ sowie $x_2(t) = x_1(t)$. Sie besteht aus einer Summe von drei Dreiecksfunktionen. $R_{x0x0}$ von $\tau$ ist die Autokorrelationsfunktion des unverzerrten Signales. Aus den Abtastwerten der Kurve können die Parameter $\Delta t$ und $\gamma$ der Polarisationsmodendispersion bestimmt werden. Aus den Parametern $\Delta t$ und $\gamma$ können die Koeffizienten eines adaptiven transversalen Filters zur Entzerrung des PMD verzerrten Signals ermittelt werden.

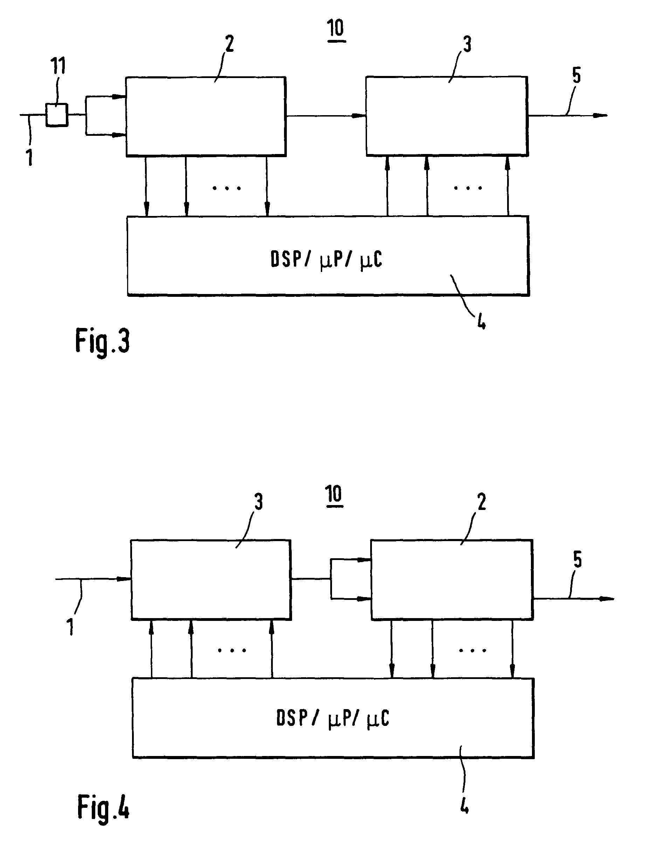

Fig. 3 zeigt beispielhaft einen optischen Empfänger 10. Das Eingangssignal 1 wird in einem optisch/elektrischen Wandler 11 gewandelt. Das Signal wird in zwei Zweige aufgeteilt, die am Eingang eines Verzerrungsdetektors 2 anliegen. Der Verzerrungsdetektor 2 ist mit seinem Ausgang mit einem Equalizer 3 verbunden. Die Parameter des Verzerrungsdetektors 2 werden in einen Mikroprozessor 4 eingespeist. Diese gemessenen Parameter werden zur Einstellung des Equalizers 3 verwendet der wiederum mit dem Mikroprozessor 4 in Verbindung steht.

In der Ausführungsform nach Fig. 4 ist der Equalizer 3 mit dem Eingangsdatenstrom 1 verbunden. Der Ausgang des Equalizers liegt am Verzerrungsdetektor 2 an. Zur Feinregelung des Equalizers können, wenn die Schaltung wie in Fig. 4 gezeigt, mit dem Ausgangssignal des Equalizers gespeist wird, beispielsweise Abtastwerte bei oder oberhalb von $T_{bit}$ als Regelgröße verwendet werden. Die Regelgröße wird gegen Null geregelt oder minimiert. Auch die Breite de Funktion nach Fig. 2 steht in unmittelbarem Zusammenhang und kann als zu minimierende Regelgröße im Empfänger verwendet werden.

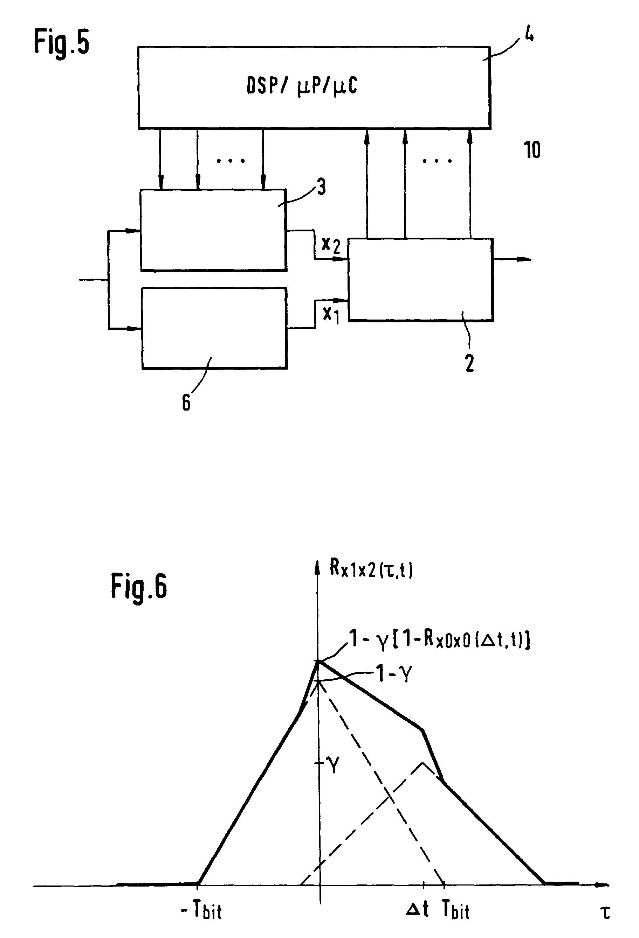

Fig. 5 zeigt eine weitere Variante des optischen Empfängers 10, mit besonderen Vorteilen für Signale, die mit einem $\gamma$ von etwa 0,5 behaftet sind. Wenn für die Detektion der Störung durch Polarisationsmodendispersion das Eingangssignal 1 lediglich in zwei Signalzweige aufgeteilt wird, so daß $x_2(t) = x_1(t)$ ist, kann das Verfahren nicht zwischen $\gamma > 0,5$ und $\gamma < 0,5$ unterschieden. Dieser Nachteil ist vermeidbar, wenn am Eingang $x_1$ das verzerrte Signal, das vom optischen Empfänger empfangen wird, anliegt und am Eingang $x_2$ ein Signal ohne PMD Verzerrung eingespeist wird. Ein solches unverzerrtes Signal kann beispielsweise am Ausgang des zu steuernden adaptiven Equalizers gewonnen werden. Durch die unterschiedlichen Entstehungsorte der Signale müssen Laufzeitunterschiede zwischen den Signalen ausgeglichen werden. Daher ist ein Verzögerer 6 vorzusehen, der mit dem Verzerrungsdetektor 2 in Verbindung steht. Für den Grenzfall, in dem $\gamma$ genau 0,5 beträgt kann das Signal prinzipiell nicht mehr mit einem linearen Equalizer entzerrt werden. Für einen solchen Fall ist ein Equalizer vorzusehen, der bereits aus einer Kombination linearen und beispielsweise einem "decision feed back equalizer" besteht.

Die Autokorrelationsfunktion $R_{x1x2}$ ist für den Fall unterschiedlicher Eingangssignale $x_1$ und $x_2$ in Fig. 6 dargestellt. Es zeigt sich eine unsymmetrische Kreuzkorrelierte zwischen dem verzerrten Eingangssignal und dem entzerrten Signal, die eine Unterscheidung zwischen den Bereichen $\gamma > 0,5$ und $\gamma < 0,5$ ermöglicht.

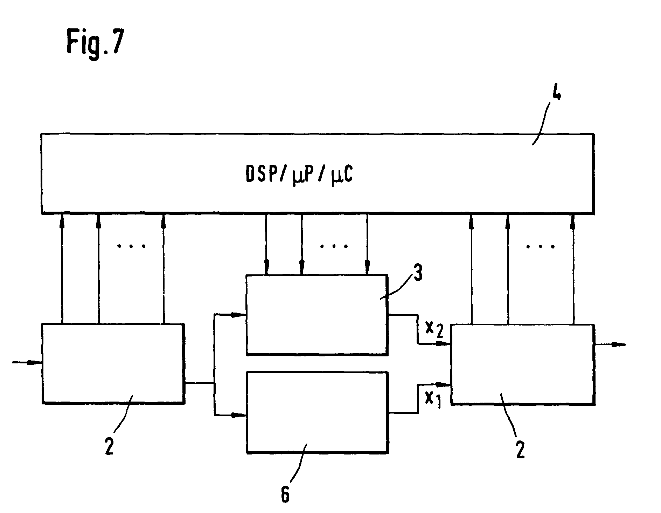

Eine zusätzliche Verbesserung des optischen Empfängers wird in Fig. 7 dargestellt. Zur Überwachung des verzerrten und des entzerrten Signales werden zwei Detektoren 2 eingesetzt. Über den ersten Verzerrungsdetektor 2 wird das Ausmaß der Verzerrung gemessen und das Ergebnis in den Equalizer 3 eingespeist. Der Ausgang des Equalizers 3 enthält dann weniger verzerrte Signale $x_2$ während über den Verzögerer 6 die verzerrten Signale $x_1$ in den zweiten Verzerrungsdetektor 2 eingespeist werden. Die Ergebnisse beider Verzerrungsmessungen werden über den Mikrokontroller 4 abgefragt und führen zu einer Nachregelung des Equalizers.

Prinzipiell ist die Methode zur Detektion von Verzerrungen geeignet, alle Verzerrungen zu detektieren, die sich auf die Leistungsdichte des Spektrums auswirken, und als Meßgröße für eine Regelung eines adaptiven Filters anzubieten. Für die Anwendung für andere Verzerrungen muß das Auswerteverfahren jeweils angepaßt werden.

In der Schaltung nach Fig. 1 ist der Einsatz von Verzögerern 6 mit unterschiedlichen Laufzeiten $\tau$ möglich. Weiterhin ist es denkbar, die gesamte Anordnung mit variabler Verzögerung aufzubauen und auf eine Verzögererkette zu verzichten. Dann ist ein Multiplizierer und ein Tiefpass erforderlich und die Abtastwerte, die die Funktion nach Fig. 2 liefern, werden nacheinander gewonnen. Dieses Verfahren hat allerdings den Nachteil, daß es langsamer ist.

Die zeitabhängigen Verzerrungen können im Gegensatz zu Pseudo-Error-Monitoren auch bei geschlossenem Auge, d.h. bei sehr starken Verzerrungen des optischen Signals detektiert werden. Die Geschwindigkeit der Detektion und dämit die zulässige Änderungsgeschwindigkeit der zeitabhängigen Verzerrungen wird dabei um den Faktor 1000 erhöht. Im Gegensatz zu Bandpaßlösungen werden die für die Polarisationsmodendispersion charakteristischen Größen direkt im Zeitbereich ermittelt und lassen sich so leicht in Koeffizientenwerte für ein Transversalfilter umrechnen. Vorteilhafterweise wird die Erfindung als integrierte Schaltung realisiert.

## Patentansprüche

1. Methode zur Detektion von Verzerrungen von optischen Signalen durch Dispersionseffekte der optischen Übertragungsstrecke, dadurch gekennzeichnet, daß durch einen Schaltung das optisch/elektrische Eingangssignal von der durch die zu übertragenden Daten vorhandenen Modulation befreit wird, und die so erhaltenen Signale ausschließlich Informatiönen über die Form der Impulse und damit der Wirkung der Dispersioneffekte auf die Signale enthalten.

2. Methode zur Detektion von Verzerrungen von optischen Signalen durch Dispersionseffekte der optischen Übertragungsstrecke, dadurch gekennzeichnet,

daß das Eingangssignal ($x_1$) mit einem Signal eines zweiten Signalzweigs ($x_2$) in einen Detektor (2) eingespeist wird,
daß die Signale in den beiden Zweigen gegeneinander verzögert werden,
daß die Signale anschließend multipliziert und einer Integration unterzogen werden und
daß das Ergebnis der Filterung einem Mikroprozessor (4) zur Analyse zugeführt wird.

3. Methode noch Anspruch 2, dadurch gekennzeichnet, daß die beiden Signalzweige aus dem Eingangssignal ($x_1$) gebildet werden.

4. Methode nach Anspruch 2, dadurch gekennzeichnet daß die beiden Signalzweige aus dem Eingangssignal ($x_1$) und einem bereits korrigierten Signal ($x_{2'}$) gebildet werden.

5. Methode nach Anspruch 2, dadurch gekennzeichnet, daß die Ergebnis der Filterung eine Funktion $R_{x1x2}$ ($\tau$,t) über $\tau$ darstellen und die Abtastwerte der Funktion die beiden Parameter $\gamma$, $\tau$ einer Polarisationsmoden-Dispersion bestimmen.

6. Empfänger (10) für durch Dispersionseffekte auf der Übertragungsstrecke (1) verzerrten optischen Signalen bestehend aus einem optisch/elektrisch Wandler (11), einem Equalizer (3) und einem Mikroprozessor (4), dadurch gekennzeichnet, daß der Equalizer (3) mit mindesten einem Verzerrungsdetektor (2) verbunden ist und sowohl Verzerrungsdetektor (2) und Equalizer (3) mit einer gemeinsamen Steuerung über einen Mikroprozessor (4) in Verbindung stehen.

7. Empfänger (10) nach Anspruch 5, dadurch gekennzeichnet, daß der Verzerrungsdetektor (2) nach der Methode nach Anspruch 1 arbeitet.

8. Empfänger (10) nach Anspruch 6, dadurch gekennzeichnet, daß der Verzerrungsdetektor (2) mit mindestens einem Verzögerer (6) verbunden ist und ein unverzögertes und ein dazu verzögertes Signal verarbeitet.

Fig.1

Fig.2

Fig.3

Fig.4

## Fig.5

DSP/ μP/μC

4

10

3

$x_2$

$x_1$

2

6

## Fig.6

$R_{x1x2}(\tau,t)$

$1-\gamma[1-R_{x0x0}(\Delta t,t)]$

$1-\gamma$

$\gamma$

$-T_{bit}$      $\Delta t$   $T_{bit}$    $\tau$

Fig.7

DSP/ μP / μC

3

x₂

x₁

2

2

6